# FASCICULE DE BREVET EUROPEEN

(11) **EP 2 237 251 B1**
(45) Date de publication et mention de la délivrance du brevet: **12.11.2014**
(21) Numéro de dépôt: 10352001.1
(22) Date de dépôt: 02.04.2010
(51) Int. Cl.: G09F 21/04, D06M 17/00, B32B 5/26, B41M 7/00

(54) **Procédé de fabrication d'un dispositif publicitaire mobile**
Verfahren zur Herstellung einer mobilen Werbevorrichtung
Process for the production of a mobile advertising device

(30) Priorité: 03.04.2009 FR 0901624
(43) Date de publication de la demande: 06.10.2010
(73) Titulaire: Pavan, Franck, 31260 Touille (FR); Pavan, Marguerite, 31260 Touille (FR)
(72) Inventeur: Pavan, Franck, 31260 Touille (FR); Pavan, Marguerite, 31260 Touille (FR)

(56) Documents cités:
- EP-A2- 0 779 162
- EP-A2- 1 647 627
- WO-A1-2007/081075
- WO-A1-2009/023654
- WO-A2-03/001488
- FR-A1- 2 700 877
- 'M-Pyrol - Material Safety Data Sheet'

## Description

La présente publication a pour objet la communication sur des visuels de grandes surfaces équipés d'un système de protection et d'un boitier électronique de type GPS ou équivalent sur des véhicules routiers.
Aujourd'hui, les bâches de remorques de véhicules routiers peuvent être équipées d'un système de protections, système qui fait l'objet d'une protection industrielle et qui peut être grossièrement assimilé à un tissu anti-lacération.
Son usage reste toutefois limité puisqu'il ne peut équiper que des bâches dont la surface d'impression est faible.

En effet, les brevets actuels tels que WO 03/001488 A2 (PITT JOHN DUNLOP) et WO 2009/023654 Al (GRAPHIC LAMINATING LLC) permettent de répondre partiellement à l'utilisation des bâches de remorque de véhicules routiers comme support de communication. D'une part, le brevet WO 03/001488 A2 permet d'utiliser la bâche de remorque elle même comme support d'un autre tissu afin de communiquer sur une surface grande ou petite. Cependant, cette solution ne répond pas aux contraintes de tenues mécaniques nécessaires au transport de marchandises. De plus, ce tissu est parfaitement démontable et ne permet pas la protection du chargement du camion. L'utilisation du brevet WO 2009/023654 A1, afin d'augmenter les propriétés physiques des supports d'impression ainsi que la tenue dans le temps, n'a pas encore permis de mettre en oeuvre une solution aboutie permettant d'utiliser les bâches de remorques de camion comme support de communication.

De ce fait, l'utilisation de tissus possédant des propriétés anti-lacération n'est possible que sur les visuels dont la partie imprimée est de faible surface Les publicités itinérantes grands formats sur bâches de camions sont donc systématiquement démunies de système anti-lacération.

La présente invention a pour objet un procédé de fabrication d'un visuel publicitaire comprenant :
i. - un tissu (3) en fibre synthétique à fort grammage de plus de 600 g/m², déjà préparé en surface à recevoir une encre d'impression, qui est directement imprimé en polychromie (2) ou sur lequel un visuel de grande taille est collé (2),
ii. -un agent liquide, de type vernis de type bi-composants à base d'eau (9/10) dilué avec 1/10 de durcisseur, composé d'une partie à base de N-methyl-2-pyrrolidone et d'eau à laquelle est ajoutée un composant à base de solvant et d'Hexamethylene-1-6-diisocyanate, le protégeant mécaniquement et climatiquement, appliqué sur le visuel de ce tissu (3), ce vernis à base d'eau se présentant sous la forme de deux composants, le deuxième composant servant à déclencher la prise du vernis sur le support à protéger,
iii. -un tissu de protection anti-lacération contre la détérioration et le vandalisme (4) appliqué sur la face interne du tissu (3), caractérisé en ce que l'on imprime ou colle un visuel sur un tissu (3), on applique un vernis (1) sur le visuel, on laisse sécher et durcir le vernis, on applique par thermocollage le tissu de protection antilacération (4) sur la face interne du tissu (3).

Le dispositif présenté a pour objet la fabrication d'un dispositif publicitaire mobile sécurisé et localisé en temps réel, caractérisée par;
1. Figure 1-2 : Une impression totale ou partielle de manière polychromique,
2. Figure 1-1 : Une protection de l'impression, avant fixation du 3ieme point

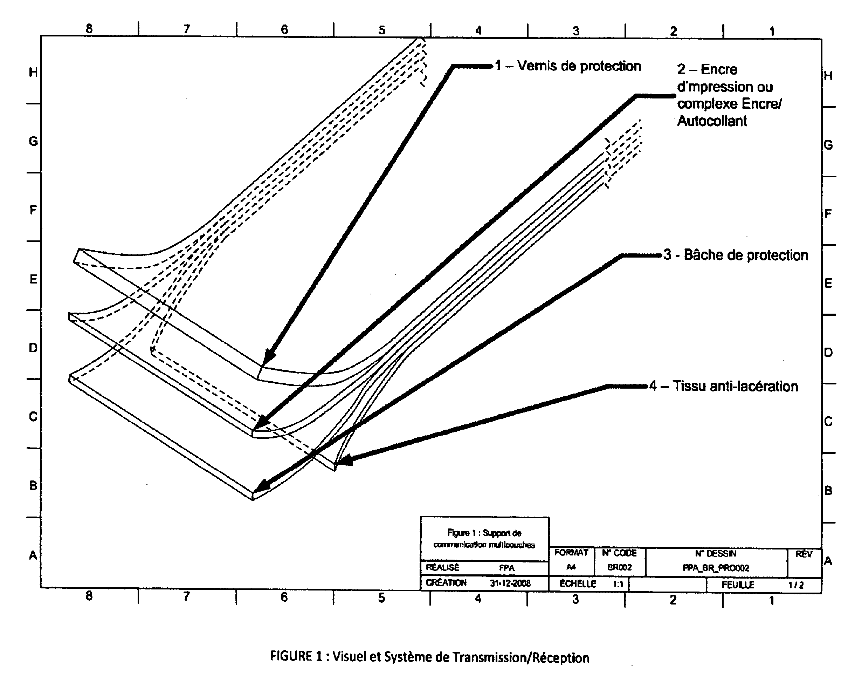

3. Figure 1-4 : Une protection contre les lacérations

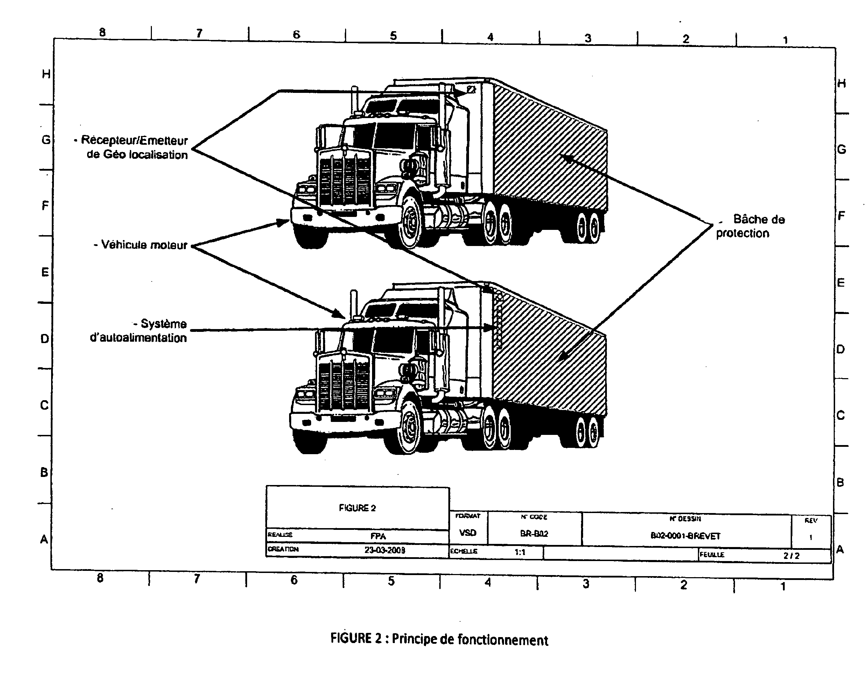

4. Figure 2-1 : Un système de géo-localisation.

1- L'impression de la totalité de la bâche, ou de manière partielle, en polychromie constitue un imposant support de communication permettant de vastes possibilités.
2- Une protection de l'impression polychromique ;
   Comme nous avons vu plus haut le système anti-lacération, qui est un système appliqué par thermocollage, n'est pas compatible avec les systèmes d'impressions numériques actuelles. La protection de l'impression consiste donc à l'application d'un agent liquide, de type vernis, sur le coté de la bâche imprimée. C'est après durcissement que les propriétés de cet agent liquide permettent de protéger la partie imprimée de la bâche de la chauffe nécessaire à l'installation du point suivant en 3 . De plus, il protégera aussi la bâche contre le vieillissement lié aux conditions climatiques ou aux graffitis.
3- Un système anti-lacération ;
   Cette protection consiste à effectuer un thermocollage d'un tissu aux propriétés anti-lacération sur la face interne de la bâche avant la confection de celle-ci selon les contraintes de la carrosserie de la remorque. Ce système permettra de satisfaire les exigences en matière de sécurité de la clientèle des transporteurs ainsi que les exigences grandissantes des assurances.
4- Un système de géo-localisation
   Ce dispositif de géo-localisation permet de connaitre en temps réel la position du visuel ainsi que d'autres éléments d'informations pouvant être transmis par le boitier électronique solidaire ou non du visuel (comme retracer le parcours du visuel). Ces quatre facteurs réunis permettent d'obtenir un visuel imprimé et inviolable, permettant de communiquer en grand format sur une zone géographique vaste, tout en restant localisable à tout moment avec une traçabilité des trajets.
   Ce procédé peut s'appliquer à tout type de bâches dont le but est la protection de biens avec le souci d'éviter les coupures pouvant altérer les propriétés intrinsèques de la bâche de protection. Ce procédé permet d'envisager des campagnes de communication à très grande échelle en associant les capacités d'impressions numériques actuelles aux systèmes de transports terrestres.

Ce procédé de fabrication n'est actuellement pas utilisé car il est économiquement non viable dans la mesure ou les bâches de camions n'ont pas de but lucratifs mais seulement de protection des biens transportés, dans la mesure où les bâches de véhicules routiers peuvent être considérées comme support de moyen de communication, celles-ci doivent répondre aux contraintes de ce type de support, notamment l'inviolabilité, la protection contre les graffitis ou le vandalisme, la capacité de ne pas être lacérée et d'assurer au visuel exposé une durabilité aux conditions climatiques auxquelles il est exposé.
Le dispositif suivant ayant la particularité d'une localisation du visuel précise, sur une zone géographique petite ou grande sans exception, permet de pouvoir envisager des campagnes publicitaires de grande envergure couvrant tout ou partie de la planète. Une communication planétaire est alors envisageable alors que les supports existants n'ont qu'une couverture très localisée sur le plan régional ou national. De plus, l'apport de la technologie de localisation temps réel permet à l'annonceur de suivre sa campagne en temps réel par l'intermédiaire d'une interface internet.

Les dessins annexés illustrent l'invention :
La figure 1 représente la bâche d'un véhicule routier équipé de l'ensemble des systèmes de protection.
La figure 2 représente la bâche montée sur la carrosserie de la remorque d'un camion.

La bâche de protection (figure 1 : 3) de véhicule terrestre est tout d'abord imprimée ou, autre possibilité, un visuel de grande taille est collé dessus (figure 1 :2). Une fois cette phase d'impression ou collage réalisée, une couche de vernis de protection est déposée sur l'ensemble du visuel polychromique afin de le protéger des intempéries climatiques et de lui permettre un traitement à la chaleur ultérieur (figure 1 : 1). Ce nouveau visuel est ensuite équipé d'un tissu aux propriétés anti-lacération (figure 1 : 4) qui est soudé par thermocollage sur la face interne du visuel (figure 1 : 3).
Une fois le visuel terminé, il est confectionné afin de pouvoir être mis en place sur la carrosserie de la remorque du camion (figure 2) sur lequel il doit être posé. Ce visuel est alors équipé de système de géo-localisation solidaire ou non du visuel (figure 2).

L'objet de l'invention permet de s'affranchir des problèmes de visibilité liés à l'immobilité du support publicitaire. Il permet de suivre en temps réel le trajet de la campagne publicitaire à partir d'une interface graphique consultable depuis n'importe quel point de la planète sur la base d'une connexion internet et il satisfait à l'ensemble des exigences de ce type de support de communication.

## Revendications

1. Procédé de fabrication d'un visuel publicitaire comprenant :
i. - un tissu (3) en fibre synthétique à fort grammage de plus de 600 g/m², déjà préparé en surface à recevoir une encre d'impression, qui est directement imprimé en polychromie (2) ou sur lequel un visuel de grande taille est collé (2),
ii. -un agent liquide, de type vernis de type bi-composants à base d'eau (9/10) dilué avec 1/10 de durcisseur, composé d'une partie à base de N-methyl-2-pyrrolidone et d'eau à laquelle est ajoutée un composant à base de solvant et d'Hexamethylene-1-6-diisocyanate, le protégeant mécaniquement et climatiquement, appliqué sur le visuel de ce tissu (3), ce vernis à base d'eau se présentant sous la forme de deux composants, le deuxième composant servant à déclencher la prise du vernis sur le support à protéger,
iii. -un tissu de protection anti-lacération contre la détérioration et le vandalisme (4) appliqué sur la face interne du tissu (3),
**caractérisé en ce que**
l'on imprime ou colle un visuel sur un tissu (3), on applique un vernis (1) sur le visuel, on laisse sécher et durcir le vernis, on applique par thermocollage le tissu de protection antilacération (4) sur la face interne du tissu (3).

## Patentansprüche

1. Herstellungsverfahren eines visuellen Werbeträgers, welches enthält :
i. - Einen Stoff (3) aus Synthetikfasern mit einem hohen Flächengewicht von mehr als 600 g/m², mit einer bereits präparierten Oberfläche um Druckfarbe aufzunehmen, der direkt mehrfarbig bedruckt (2) oder auf den ein grosse Bildfläche geklebt ist (2),
ii. - Eine flüssige Substanz, vom Typ Zwei-Komponenten-Lack auf Wasserbasis (9/10) und Härtemittel (1/10), bestehend zu einem Teil auf der Basis von N-Methyl-2-pyrrolidon und Wasser, zu der eine Komponente auf Lösungsmittelbasis und Hexamethylen-1,6 diisocyanat hinzugefügt ist, den Stoff vor mechanischen und klimatischen Einflüssen schützend, aufgetragen auf der Sichtfläche des Stoffes (3), dieser 2-Komponenten-Lack auf Wasserbasis, dessen zweite Komponente die Polymerisation des Lackes auf dem zu schützenden Untergrund einleitet,
iii. - Ein Gewebe mit einer durchdringungsfesten Schutzschicht gegen Beschädigungen und Vandalismus (4), das auf der Innenseite des Stoffes (3) aufgetragenen wird,
**dadurch gekennzeichnet, dass**
man eine Bildfläche auf einen Stoff (3) druckt oder klebt, einen Lack (1) auf die Fläche aufträgt, den Lack trocknen und härten lässt, die durchdringungsfeste Schutzschicht (4) auf die Innenseite des Gewebes (3) durch Wärmeverklebung appliziert.

## Claims

1. Manufacturing process of an advertising visual including :
i. - A fabric (3) made of synthetic fibers of heavy weight over 600 g/m², with already prepared surface to receive printing ink, directly polychromic printed (2) or on which a large scale visual is stuck (2),
ii. - A liquid agent, varnish type composed of 2 compounds, water (9/10) diluted with hardening agent (1/10), this component is based on N-methyl-2-pyrrolidone and water from which is added a solvant based compound made of Hexamethylene-1-6-diisocyanate, protecting mechanically and climatically, applied on the visual of the fabric (3), this water based formulated varnish made from two compounds, the second compound is used to initiate the polymerisation of the varnish on the surface of the support to be protected,
iii. - An antilaceration protective fabric preventing destruction and vandalism (4) applied on the internal surface of the fabric (3),
**characterised by**
printing or sticking a visual on a fabric (3), applying a varnish(1) on the visual, letting the varnish dry and polymerise, applying by thermal sticking an antilaceration fabric (4) on the internal surface of the fabric (3).
